# EUROPEAN PATENT APPLICATION

(11) **EP 2 554 261 A1**
(43) Date of publication of application: **06.02.2013**
(21) Application number: 11762474.2
(22) Date of filing: 03.03.2011
(51) Int. Cl.: B01J 35/02, B01J 23/42, B01J 35/06, B01J 37/00, D06M 11/28

(54) **PHOTOCATALYST FIBERS AND METHOD FOR PRODUCING THE SAME**

(30) Priority: 31.03.2010 JP 2010082890
(71) Applicant: Ube Industries, Ltd., Ube-shi, Yamaguchi 780-8633 (JP)
(72) Inventor: SUYAMA, Kouichirou, Ube-shi Yamaguchi 755-8633 (JP); YAMAOKA, Hiroyuki, Ube-shi Yamaguchi 755-8633 (JP); HARADA, Yoshikatsu, Ube-shi Yamaguchi 755-8633 (JP); FUJII, Teruaki, Ube-shi Yamaguchi 755-8633 (JP); OTANI, Shinichirou, Ube-shi Yamaguchi 755-8633 (JP); SUHARA, Sadayoshi, Ube-shi Yamaguchi 755-8633 (JP)
(74) Representative: Grünecker, Kinkeldey, Stockmair & Schwanhäusser
(86) International application number: PCT/JP2011/054949
(87) International publication number: WO 2011/122234

(57) **Abstract**

Provided are a high-activity photocatalyst fiber and a production method thereof. The photocatalyst fiber is a silica-based composite oxide fiber including a composite oxide phase of an oxide phase (first phase) mainly including a silica component and a metal oxide phase (second phase) including a metal other than silica, in which the ratio of at least one or more metal elements present in a metal oxide constituting the metal oxide phase (second phase) increases gradiently toward the fiber surface, a metal constituting the metal oxide phase (second phase) is formed in the form of particles, mesopores having an average micropore diameter of 2 nm to 30 nm are formed between the particles from the fiber surface toward the inside of the fiber, and platinum (Pt) particles having an average particle diameter of 0.5 nm to 10 nm are supported inside the mesopores.

## Description

### Technical Field

The present invention relates to a high-activity photocatalyst fiber with platinum particles supported inside mesopores (micropores) formed in the fibers and a production method thereof.

### Background Art

Recently, with an increased interest in environmental preservation, it has been required to treat harmful materials in air and water. In this situation, the degradation of harmful materials of a photocatalyst by strong oxidation power has been greatly highlighted. An oxidation degradation mechanism of a photocatalyst is as follows: holes produced by excitation light oxidize OH groups to generate OH radicals and the OH radicals generated oxidize and degrade organic impurities such as organic materials, bacteria, fungi, virus, seaweed and the like. Among various active species, the OH radical has the most powerful oxidation power, and thus may completely degrade organic materials and degrade non-degradable substances which have not been able to be controlled until now unlike active species such as light, ozone, chlorine and the like by a sterilization lamp, which have been used in the related art.

As the photocatalyst, photocatalysts such as powdered titanium oxide and the like have been usually used. However, there is a problem in that these powdered photocatalysts are difficult to handle. For example, in the purification of water, it is necessary to put a photocatalyst powder into water to degrade organic impurities and then separate the photocatalyst powder from water. A photocatalyst powder may be coated and supported on a substrate, but has a problem in that the photocatalyst powder that falls off is incorporated into water.

On one hand, a photocatalyst fiber is known as the photocatalyst (Patent Literature 1). When a photocatalyst having a fiber shape is used, the above-described problems may be solved.

### Citation List

### Patent Literature

Patent Literature 1: WO/JP2008/053686

### Summary of Invention

### Technical Problem

However, it has also been required to efficiently degrade harmful materials by using high-activity photocatalyst fibers. Therefore, an object of the present invention is to provide high-activity photocatalyst fibers and a production method thereof.

### Solution to Problem

To solve the above problem, as a result of intensive studies, present inventors have found that high-activity photocatalyst fibers can be produced by irradiating light on a platinum-containing solution including a sacrificial agent and platinum while being brought into contact with the silica-based composite oxide fiber. Namely, the present invention relates to a method for producing photocatalyst fibers, including: a first process of obtaining a spinning solution which is a modified polycarbosilane having a structure in which a polycarbosilane having a number average molecular weight of 200 to 10,000 and having a main chain skeleton mainly represented by Formula 1 is modified with an organometallic compound, or a mixture of the modified polycarbosilane and an organometallic compound; a second process of obtaining a spun fiber from the spinning solution; a third process of subjecting the spun fiber to heat treatment in an oxidizing atmosphere to obtain a infusibilized fiber; a fourth process of calcining the infusibilized fiber in an oxidizing atmosphere to obtain a silica-based composite oxide fiber; a fifth process of subjecting the silica-based composite oxide fiber to surface treatment and removing silica in the vicinity of the surface thereof to form mesopores; and a sixth process of irradiating light on a platinum-containing solution including a sacrificial agent and platinum while being brought into contact with the silica-based composite oxide fiber.

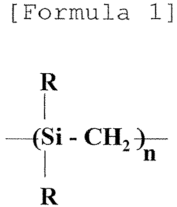

(However, in the formula, R represents a hydrogen atom, a lower alkyl group, or a phenyl group.)

Further, the present invention relates to a photocatalyst fiber which is a silica-based composite oxide fiber including a composite oxide phase of an oxide phase (first phase) mainly including a silica component and a metal oxide phase (second phase) including a metal other than silica, wherein the ratio of at least one or more metal elements present in a metal oxide constituting the metal oxide phase (second phase) increases gradiently toward the fiber surface, a metal constituting the metal oxide phase (second phase) is formed in the form of particles, mesopores having an average micropore diameter of 2 to 30 nm are formed between the particles from the fiber surface toward the inside of the fiber, and platinum (Pt) particles having an average particle diameter of 0.5 to 10 nm are supported inside the mesopores.

### Advantageous Effects of Invention

As described above, it is possible to provide high-activity photocatalyst fibers and a production method thereof according to the present invention.

### Brief Description of Drawings

Fig. 1 is a view schematically illustrating photocatalyst fibers according to the present invention.
Fig. 2 is a TEM photo of titania/silica fibers obtained in production Example 1.
Fig. 3 is a TEM photo of titania/silica fibers supporting platinum obtained in Example 5.

### Description of Embodiments

The photocatalyst fibers according to the present invention have platinum (Pt) particles supported inside mesopores formed in the photocatalyst fiber by further treating the photocatalyst fiber described in Patent Literature 1.

In the photocatalyst fibers according to the present invention, an oxide phase (first phase) mainly including a silica component may be either amorphous or crystalline. The first phase may contain a metal element or a metal oxide which may be combined with silica to form a solid solution or an eutectic point compound. Examples of a metal element which may be combined with silica to form a solid solution include titanium. Examples of a metal element of a metal oxide which may be combined with silica to form a solid solution include aluminum, zirconium, yttrium, lithium, sodium, barium, calcium, boron, zinc, nickel, manganese, magnesium and iron.

The oxide phase (first phase) forms an internal phase of the photocatalyst fiber according to the present invention, and serves an important role of taking charge of dynamic characteristics. The ratio of the first phase present in the entire photocatalyst fiber is preferably from 98% by weight to 40% by weight. In order to effectively form mesopores on the surface of the photocatalyst fiber and further express high dynamic characteristics, it is preferred that the ratio of the first phase present is controlled within a range from 50% by weight to 95% by weight.

A metal oxide constituting a metal oxide phase (second phase) serves an important role in forming mesopores on the surface of the photocatalyst fiber according to the present invention. The ratio of the second phase constituting the surface layer portion of the photocatalyst fiber present is preferably from 2% by weight to 60% by weight, and in order to exhibit the effects thereof sufficiently and also express high strength, the ratio is controlled preferably within a range from 5% by weight to 50% by weight.

The metal oxide constituting the metal oxide phase (second phase) is a semiconductor material and needs to be a material that is excited when the material is irradiated by light having a wavelength corresponding to the bandgap thereof and thus forms electron-hole pairs. The metal oxide is one or more oxides or composite oxides among titanium (Ti), vanadium (V), chromium (Cr), manganese (Mn), cobalt (Co), copper (Cu), zinc (Zn), barium (Ba), strontium (Sr), cadmium (Cd), lead (Pb), iron (Fe), nickel (Ni), aluminum (Al), gallium (Ga), germanium (Ge), indium (In), tin (Sn), zirconium (Zr), and tungsten (W). Among them, titania, barium titanate, strontium titanate, zirconia and the like are appropriately used.

In the photocatalyst fiber according to the present invention, it is preferred that the gradient of the ratio of at least one or more metal elements present in a metal oxide constituting the second phase is present to a depth of 500 nm from the surface of the photocatalyst fiber.

In the photocatalyst fiber according to the present invention, the size of mesopores is controlled by the particle size of the metal oxide constituting the second phase. In order to use mesopores as chemical reaction fields, the average micropore diameter of mesopores is from 2 nm to 30 nm and preferably from 5 nm to 20 nm. The average micropore diameter of mesopores may be measured by a gas adsorption method.

In the photocatalyst fiber according to the present invention, platinum particles are supported inside the mesopores. The average particle diameter of platinum particles is from 0.5 nm to 10 nm and preferably from 1 nm to 5 nm. The average particle diameter may be measured by using a TEM. The size of platinum particles is limited by the micropore diameter of mesopores. The weight of supported platinum particles is preferably from 0.01% by weight to 0.5% by weight and preferably from 0.1% by weight to 0.2% by weight, based on the photocatalyst fiber. The weight of supported platinum particles may be measured by ICP-AES.

In the photocatalyst fiber according to the present invention, the number of platinum particles supported inside the mesopores is preferably 6 × 10¹³ ea/m² or more per unit surface area of the mesopores. The number of platinum particles may be calculated by visual counting of particles in a TEM photo.

The photocatalyst fiber according to the present invention is produced preferably through a first process to a sixth process described below.

### (First Process)

In the first process, first, prepared is a modified polycarbosilane having a number average molecular weight of 1,000 to 50,000, which is used as a starting raw material of a silica-based composite oxide fiber. The method for preparing this modified polycarbosilane is similar to the method described in Japanese Patent Application Laid-Open No. 56-74126, but it is necessary to carefully control the bonding state of functional groups described in the document. This point will be schematically described below.

The modified polycarbosilane, which is the starting raw material, is derived from a polycarbosilane having a main chain skeleton mainly represented by Formula 2 and having a number average molecular weight of 200 to 10,000; and an organometallic compound having a general formula M(OR')n or MR''m (M represents a metal element, R' represents an alkyl group having 1 to 20 carbon atoms or a phenyl group, R'' represents acetylacetonate, and m and n each represent an integer larger than 1) as a basic structure.

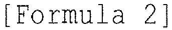

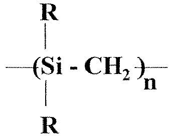

(However, in the formula, R represents a hydrogen atom, a lower alkyl group, or a phenyl group.)

In Formula 2, the lower alkyl group of R may include an alkyl group having 1 to 3 carbon atoms, and specific examples thereof include a methyl group, an ethyl group, and a propyl group.

In order to produce the photocatalyst fiber having a gradient composition according to the present invention, it is necessary to select a mild reaction condition which allows only a part of the organometallic compound to form a bonding with the polycarbosilane. For this purpose, it is necessary to perform reactions in an inert gas at a temperature of 280°C or lower and preferably 250°C or lower. Even though the organometallic compound reacts with the polycarbosilane under this reaction condition, the components are bonded to each other as a monofunctional polymer (that is, boned in a pendant form), and thus the molecular weight does not increase largely. The modified polycarbosilane, to which the organometallic compound is partially bonded, serves an important role in improving the compatibility between the polycarbosilane and the organometallic compound.

When many functional groups such as two functional groups or more are bonded thereto, a cross-linking structure of the polycarbosilane is formed and simultaneously, a significant increase in the molecular weight is recognized. In this case, an intense heat generation and a rise in the melt viscosity occur during the reaction. On one hand, when only one functional group reacts as described above and an unreacted organometallic compound remains, conversely, a drop in the melt viscosity is observed.

In the production of the photocatalyst fiber according to the present invention, it is preferred to select conditions for intentionally allowing an unreacted organometallic compound to remain. In the present invention, the materials, in which the above-described modified polycarbosilane and the organometallic compound in an unreacted state or a dimer or trimer of the organometallic compound coexist, are used as a starting raw material, but only the modified polycarbosilane may be used as the starting raw material when the modified polycarbosilane contains a modified polycarbosilane component having a fairly low molecular weight. The modified polycarbosilane thus obtained or a mixture of the modified polycarbosilane and the organometallic compound having a low molecular weight are mixed so as to obtain a spinning solution.

### (Second Process)

The spinning solution (hereinafter, referred to as a precursor in some cases) which is the modified polycarbosilane or the mixture of the modified polycarbosilane and the low molecular weight organometallic compound, which is obtained in the first process, is melted, thereby preparing an undiluted solution, and if necessary, the solution is filtered to remove harmful materials at the time of spinning, such as micro gels, impurities, and the like, and an ordinary synthetic fiber spinning machine is used to spin the spinning solution. The temperature of the spinning solution during the spinning varies depending on a softening temperature of the modified polycarbosilane of the raw material, but is advantageously in a range from 50°C to 200°C. In the spinning machine, the lower portion of a nozzle thereof may be provided with a humidifying and heating cylinder, if necessary. Further, the fiber diameter is adjusted by changing the discharge amount from the nozzle, and a winding speed of a high-speed winder installed at the lower portion of the spinning machine. In addition, the fiber may be molded directly into a felt form, without winding the fiber discharged from the nozzle, by a melt blowing method or a spun bonding method.

Besides the above-described melt spinning, the spinning solution of the modified polycarbosilane or the modified polycarbosilane and the low molecular weight organometallic compound, which is obtained in the first process, is dissolved in, for example, benzene, toluene, xylene, or other solvents in which the modified polycarbosilane and the low molecular weight organometallic compound may be melted, thereby preparing an undiluted solution, and if necessary, the undiluted solution is filtered to remove harmful materials such as micro gels, impurities and the like at the time of spinning, and then the undiluted solution is spun by a dry spinning method using an ordinary synthetic fiber spinning machine and the winding speed is controlled, thereby obtaining a target fiber.

In the second process, if necessary, a spinning cylinder is attached to the synthetic fiber spinning machine and the atmosphere in the spinning cylinder is rendered a mixed atmosphere in which a gas and at least one of benzene, toluene, xylene and the like are mixed, or an atmosphere of any one of air, inert gas, heated air, heated inert gas, steam, ammonia gas, hydrocarbon gas, and organic silicon compound gas, thereby making it possible to control the solidification of the spun fiber in the spinning cylinder.

### (Third Process)

In the third process, the spun fiber obtained in the second process is preliminarily heated with or without tension in an oxidizing atmosphere to infusibilize the spun fiber. The third process is performed for the purpose of preventing the fiber from being fused or melted and from adhering to adjacent fibers at the time of calcining in a fourth process. The treatment temperature and the treatment time vary depending on the composition, and are not particularly limited, but generally, the treatment temperature is from 50°C to 400°C and the treatment time is from several hours to 30 hours. Further, the above-described oxidizing atmosphere may contain a component for enhancing the oxidation power of the spun fiber, such as moisture, nitrogen oxide, ozone, and the like. In addition, the partial pressure of oxygen in the oxidizing atmosphere may be intentionally changed. According to the proportion of low molecular weight materials contained in the starting raw material used in the first process, the softening temperature of the spun fiber may be lower than 50°C, and in this case, the treatment for promoting the oxidation of the fiber surface may be beforehand performed at a lower temperature than the above-described treatment temperature.

In the photocatalyst fiber according to the present invention, it is thought that in the second and third processes, the bleeding-out of the low molecular weight compounds included in the starting raw material into the fiber surface advances, and thus a foundation for a target gradient composition is formed.

### (Fourth Process)

In the fourth process, the infusibilized fiber obtained in the third process is calcined with or without tension preferably at 500°C to 1,800°C in an oxidizing atmosphere, and thus manufactured are silica-based composite oxide fibers including a composite oxide phase of an oxide phase (first phase) mainly including a silica component and a metal oxide phase (second phase) that includes a metal other than silica, in which the ratio of at least one or more metal elements present in a metal oxide constituting the second phase increases gradiently toward the fiber surface and a metal constituting the second phase is in the form of particles. The calcining temperature in the fourth process affects the particle size of the metal constituting the second phase. That is, as the calcining temperature increases, the particle size of the metal constituting the second phase increases. The size of the mesopores is controlled by the particle size of the metal constituting the second phase, and thus the calcining temperature is selected according to a target size of the mesopores. In the fourth process, organic material components included in the infusibilized fiber are basically oxidized, but according to selected conditions, the components may remain as carbon or carbides in some cases. Even in such a state, the infusibilized fiber is used as it is when a target function is not impaired, but is further subjected to an oxidizing treatment when the target function is impaired. In this case, it is essential to select the treatment temperature and the treatment time that do not cause a problem against a target gradient composition and a target crystal structure.

### (Fifth Process)

In the fifth process, the silica-based composite oxide fiber obtained in the fourth process is subjected to surface treatment, thereby removing silica in the vicinity of the surface to form mesopores on the surface of fibers. The method for removing silica is not particularly limited, and any physical method or chemical method may be used. Examples thereof include a method of evaporating silica at high temperature under reduced pressure, a method of eluting out silica by using an acid and the like. In particular, a method of removing silica by immersing the silica-based composite oxide fiber obtained in the fourth process into a 2% by weight aqueous solution of hydrogen fluoride for about 10 minutes, or a 10% by weight aqueous solution of sodium hydroxide for about 12 hours is appropriate.

### (Sixth Process)

In the sixth process, a photocatalyst fiber is manufactured by irradiating light on a platinum-containing solution (electrodeposition solution) including a sacrificial agent and platinum while being brought into contact with the silica-based composite oxide fibers to support platinum particles inside the mesopores of the silica-based composite oxide fibers. While a platinum-containing solution obtained by adding a sacrificial agent to a solution containing platinum is brought into contact with the silica-based composite oxide fibers, platinum particles may be selectively supported onto the reduction site (surface which is not irradiated by light, that is, inside the mesopores) of the metal oxide by irradiating light having an energy equal to or more than the energy corresponding to the bandgap of the metal oxide constituting the second phase.

Examples of the sacrificial agent include formic acid, sodium hydride and alcohol, and alcohol is preferred and methanol or ethanol is further preferred from the viewpoint of economic efficiency and safety in handling.

The concentration of platinum in the platinum-containing solution may be adjusted according to a target supporting amount, is not particularly limited as long as the concentration is within a range in which platinum may be dissolved in the platinum-containing solution, and is in a range preferably from 1.0 ppm to 10.0 ppm and more preferably from 2.0 ppm to 5.0 ppm. When the concentration is less than 1.0 ppm, it is difficult to obtain a desired photocatalytic activity, and when the concentration exceeds 10.0 ppm, it is difficult to obtain a more increase in activity, which is uneconomical.

The concentration of the sacrificial agent in the platinum-containing solution may be adjusted according to the irradiation time of light, and is in a range preferably from 0.1% by weight to 50.0% by weight, more preferably 0.5% by weight to 20% by weight, and particularly preferably 2.0% by weight to 15.0% by weight. When the concentration is 0.5% by weight or higher, the reduction in irradiation time may be expected. When the concentration exceeds 50. 0% by weight, it is difficult to obtain any particular effects of reducing irradiation time, and thus the concentration is preferably 50.0% by weight or less from the viewpoint of economic efficiency.

The wavelength of light irradiated is not particularly limited as long as a light has an energy equal to or more than the energy corresponding to the bandgap of the metal oxide constituting the second phase. When the second phase is, for example, anatase type titania, the bandgap thereof is 3.2 eV, and thus an energy corresponding thereto, that is, a wavelength of 387 nm or less may be used. The intensity of light is not particularly limited, but is preferably in a range from 2. 5 mW/cm² to 7.0 mW/cm² because the stable increase in photocatalytic activity may be expected in the range. The range may be readily achieved by using a commercially available lamp and thus is economically excellent.

### Examples

Hereinafter, high-performance photocatalyst fibers including the silica-based composite oxide fiber according to the present invention will be described in more detail with reference to Examples, but the present invention is not limited to the following Examples and various modifications are possible in a range without departing from the spirit of the present invention.

### (Reference Example 1: Preparation of Plycarbosilane)

Into a three-necked flask of 5 L volume were charged 2.5 L of anhydrous toluene and 400 g of metallic sodium, the mixture was heated up to the boiling point of toluene under nitrogen gas stream, and 1 L of dimethyl dichlorosilane was added thereto dropwise over one hour. After the end of the dropwise addition, the solution was refluxed under heating for 10 hours to produce a precipitation. The precipitation was filtered and washed with methanol and water in turn to obtain 420 g of a white powder of polydimethylsilane. Into a three-necked flask equipped with a water-cooling condenser was charged 250 g of the polydimethylsilane obtained, and then the polydimethylsilane was heated to be caused to react at 420°C for 30 hours under nitrogen gas stream to obtain a polycarbosilane having a number average molecular weight of 1,200.

### (Production Example 1)

To 50 g of the polycarbosilane synthesized by the method of Reference Example 1 were added 100 g of toluene and 50 g of tetrabutoxytitanium, the mixture was preliminarily heated at 100°C for 1 hour, the temperature was slowly increased up to 150°C to distill off toluene, the reaction components were allowed to react with each other for 5 hours, the temperature was further increased up to 250°C and the reaction components were allowed to react with each other for 5 hours to synthesize a modified polycarbosilane. In order to cause a low molecular weight organometallic compound to coexist intentionally, 5 g of tetrabutoxytitanium was added to the modified polycarbosilane so as to obtain a mixture (spinning solution) of the modified polycarbosilane and the low molecular weight organometallic compound.

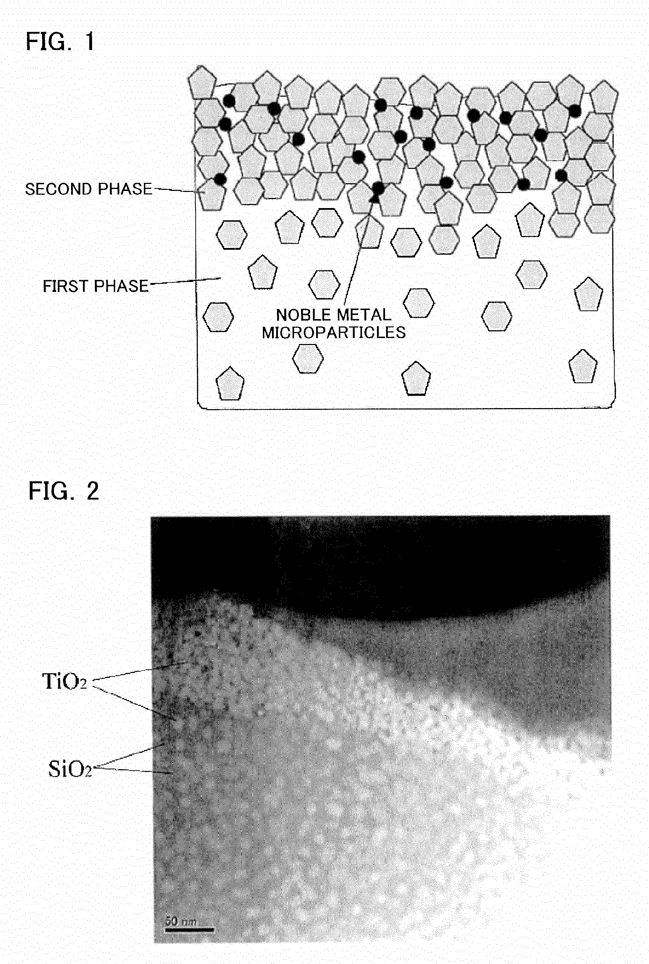

The obtained mixture of the modified polycarbosilane and the low molecular weight organometallic compound was dissolved in toluene, the resultant solution was injected into a spinning machine made of glass, the inside thereof was sufficiently purged with nitrogen, the temperature was increased to distill off toluene, and a mixture was then melt-spun at 180°C. The obtained spun fibers were stepwise heated up to 150°C in air to be infusibilized, and thereafter, the fibers were calcined at temperatures of 900°C to 1,300°C in air for 1 hour to obtain titania/silica fibers. The fibers were immersed in a 2% by weight aqueous solution of hydrogen fluoride for 10 minutes to remove silica on the fiber surfaces, thereby obtaining titania/silica fibers (average particle diameter: 10 µm) having a mesopore structure. Fig. 2 illustrates a TEM (transmission electron microscope) photo of the titania/silica fiber having a mesopore-structure at a calcining temperature of 1,200°C.

### The titania/silica fibers obtained in Production

Example 1 include amorphous silica and anatase titania as a result of the X-ray diffraction thereof. Further, as a result of the fluorescent X-ray analysis thereof, the ratio by weight of the silica was 78% by weight and that of the titania was 22% by weight. In addition, the distribution state of constituting atoms therein was measured by an EPMA (X-ray micro-analyzer), and as a result, it was confirmed that Ti/Si (ratio by mole) was from 0.90 to 0.94 in a region from the outermost periphery of the fiber to a depth of 1 µm, Ti/Si (ratio by mole) was from 0.12 to 0.15 in a region from the outermost periphery thereof to a depth of 3 µm to 4 µm, and Ti/Si (ratio by mole) was from 0. 03 µm to 0. 04 µm in the central region, and that the fibers had a gradient composition in which the content of titanium was increased toward the fiber surface.

### (Examples 1 to 7)

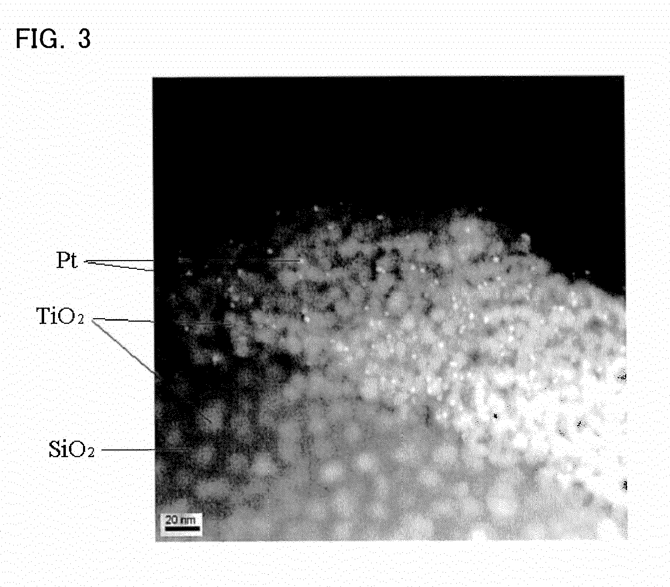

2.38 g of the titania/silica fibers obtained in Production Example 1 was put into a glass container with a size of length 550 mm, width 380 mm and height 25 mm, and a thickness of 3.3 mm, immersed in 1L of an electrodeposition solutions (concentration of platinum: 4.98 ppm) prepared by dissolving 12.4 mg of potassium hexachloroplatinate (IV) in 0.1, 0.5, 1, 2, 3, 5, and 15% by weight aqueous solutions of ethanol, respectively, and irradiation (electrodeposition reaction) was performed at an intensity of 5.5 mW/cm² for 4 hours by using a black light. After the irradiation, the fibers were taken out from the glass container, washed with water, and dried to obtain photocatalyst fibers with the concentration of ethanol changed in Examples 1 to 7. From the results of ICP-AES, the amount of platinum supported in the photocatalyst fibers in Example 5 was 0.1% by weight (based on the photocatalyst fibers). Furthermore, from the TEM observation results thereof (Example 5), it was known that the supported platinum was present only inside the mesopores on the photocatalyst fiber surface as shown in Fig. 3 and the particles have a particle diameter of about 2 nm to 5 nm and a spherical shape in any platinum. The number of platinum particles per unit surface area of the mesopores was 1 × 10¹⁴ ea/m².

### (Comparative Example 1)

Photocatalyst fibers of Comparative Example 1 were obtained in the same manner as in Example 1, except that ethanol as a sacrificial agent was not added thereto.

The activities of photocatalyst fibers in Examples 1 to 7 and Comparative Example 1 were measured by the following method. First, dimethyl sulfoxide (DMSO) producing a product from reaction with OH radical which was a main active species of the photocatalyst was used to quantify an amount of methane sulfonic acid (MSA) produced as a product with OH radicals. Specifically, the activity of the photocatalyst (MSAm) was obtained by injecting a sample with a size of φ40 mm and 50 mg into a Petri dish with φ40 mm, pouring to the Petri dish 10 ml of a DMSO solution with the concentration thereof adjusted to 100 ppm, using a black light to irradiate UV light at an intensity of 2.5 mW/cm² for 60 minutes, and measuring the amount of MSA produced in the DMSO aqueous solution by ion chromatography (IC). The degree of activity improvement was expressed as a percentage by using the photocatalytic activity (MSAref) measured in the same manner before the electrodeposition reaction as a denominator. The results are shown in Table 1.

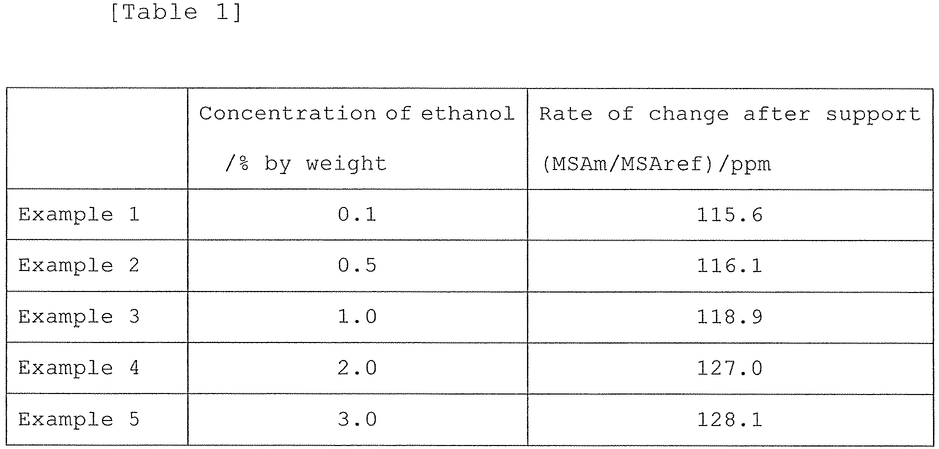

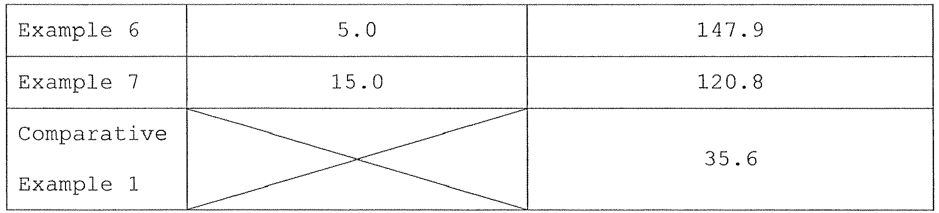

As can be known from Table 1, the activity had been significantly increased in the fiber in which platinum was supported by adding ethanol as a sacrificial agent. On one hand, when ethanol was not added, conversely, the photocatalytic activity had been significantly reduced.

## Claims

1. A method for producing photocatalyst fibers, comprising:
a first process of obtaining a spinning solution which is a modified polycarbosilane having a structure in which a polycarbosilane having a number average molecular weight of 200 to 10,000 and having a main chain skeleton mainly represented by Formula 1 is modified with an organometallic compound, or a mixture of the modified polycarbosilane and an organometallic compound;
a second process of obtaining a spun fiber from the spinning solution;
a third process of subjecting the spun fiber to heat treatment in an oxidizing atmosphere to obtain a infusibilized fiber;
a fourth process of calcining the infusibilized fiber in an oxidizing atmosphere to obtain a silica-based composite oxide fiber;
a fifth process of subjecting the silica-based composite oxide fiber to surface treatment and removing silica in the vicinity of the surface thereof to form mesopores; and
a sixth process of irradiating light on a platinum-containing solution comprising a sacrificial agent and platinum while being brought into contact with the silica-based composite oxide fiber. 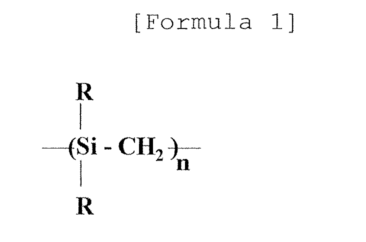
(However, in the formula, R represents a hydrogen atom, a lower alkyl group, or a phenyl group.)

2. The method for producing photocatalyst fibers according to claim 1, wherein the sacrificial agent is methanol or ethanol.

3. The method for producing photocatalyst fibers according to claim 1 or 2, wherein a concentration of the platinum in the platinum-containing solution is from 1.0 to 10.0 ppm.

4. The method for producing photocatalyst fibers according to any of claims 1 to 3, wherein a concentration of the sacrificial agent in the platinum-containing solution is from 0.1 to 50.0% by weight.

5. The method for producing photocatalyst fibers according to any of claims 1 to 4, wherein the light has an intensity of 2.5 to 7.0 mW/cm².

6. A photocatalyst fiber which is a silica-based composite oxide fiber comprising a composite oxide phase of an oxide phase (first phase) mainly comprising a silica component and a metal oxide phase (second phase) comprising a metal other than silica,
the ratio of at least one or more metal elements present in a metal oxide constituting the metal oxide phase (second phase) increasing gradiently toward the fiber surface, a metal constituting the metal oxide phase (second phase) being formed in the form of particles, mesopores having an average micropore diameter of 2 to 30 nm being formed between the particles from the fiber surface toward the inside of the fiber, and platinum (Pt) particles having an average particle diameter of 0. 5 to 10 nm being supported inside the mesopores.

7. The photocatalyst fiber according to claim 6, wherein the number of the platinum particles supported inside the mesopores is 6 × 10¹³ ea/m² or more per unit surface area of the mesopores.
